# EUROPÄISCHE PATENTSCHRIFT

(11) **EP 2 851 975 B1**
(45) Veröffentlichungstag und Bekanntmachung des Hinweises auf die Patenterteilung: **06.11.2019**
(21) Anmeldenummer: 14003032.1
(22) Anmeldetag: 03.09.2014
(51) Int. Cl.: H01M 2/20, H01M 10/613, H01M 10/617, H01M 10/6551, H01M 10/6553, H01M 10/6566, H01M 10/42, H01M 10/61, H01M 10/6556

(54) **BATTERIEVORRICHTUNG MIT KÜHLVORRICHTUNG ZUR KÜHLUNG VON BATTERIEZELLEN SOWIE KÜHLVERFAHREN**
BATTERY DEVICE WITH COOLING DEVICE FOR COOLING BATTERY CELLS, AND COOLING METHOD
DISPOSITIF DE BATTERIE AVEC DISPOSITIF DE REFROIDISSEMENT DESTINÉ À REFROIDIR DES ÉLÉMENTS DE BATTERIE ET PROCÉDÉ DE REFROIDISSEMENT

(30) Priorität: 18.09.2013 DE 102013015422
(43) Veröffentlichungstag der Anmeldung: 25.03.2015
(73) Patentinhaber: Airbus Defence and Space GmbH, 85521 Ottobrunn (DE)
(72) Erfinder: Hofmann, Michael, 85579 Neubiberg (DE); Steinwandel, Jürgen, 88690 Uhldingen-Mühlhofen (DE); Ohnesorge, Alexander, 85649 Brunnthal (DE); Pilawa, Michael, 80807 München (DE)
(74) Vertreter: Kastel, Stefan

(56) Entgegenhaltungen:
- EP-A1- 2 352 185
- EP-A1- 2 924 797
- DE-A1-102009 011 659
- DE-A1-102009 035 465
- DE-A1-102009 045 012
- DE-A1-102011 079 394
- FR-A- 1 499 419
- US-A1- 2004 166 727
- US-A1- 2011 189 511

## Beschreibung

Die Erfindung betrifft eine Batterievorrichtung mit mehreren Batteriezellen und mit einer Kühlvorrichtung zur Kühlung der Batteriezellen sowie ein Kühlverfahren zur Kühlung der Batteriezellen einer solchen Batterievorrichtung.

Um eine gute Leistungs- und Lebensdauer erzielen zu können, ist es von Vorteil, wenn Batteriezellen gekühlt werden und dabei vorzugsweise auf einem stets gleichen Temperaturniveau gehalten werden. Bei der Kühlung größerer Batteriesysteme mit einer Vielzahl von einzelnen Batteriezellen ist es dabei wünschenswert, sämtliche Zellen möglichst auf einem gleichen Temperaturniveau zu halten, da sonst eine unterschiedliche Alterung der einzelnen Batteriezellen die Folge wäre. Die Leistungsfähigkeit der gesamten Batterie wird nämlich durch die Leistungsfähigkeit der schwächsten Zelle bestimmt, so dass es vorteilhaft ist, wenn sämtliche Zellen gleich stark altern.

Bekannt sind unterschiedliche Verfahren, bei denen mit Flüssigkeiten oder Gas die Batteriezellen gekühlt werden. Mit diesen Verfahren kann jedoch nur eine unvollständige Vergleichmäßigung der Temperatur in den Batteriezellen erreicht werden oder der Aufwand in der Fertigung ist verhältnismäßig hoch.

Aus der EP 2 353 185 A1 ist ein Batteriebehälter mit einer verbesserten Hitzedissipation bekannt.

Aus der DE 10 2009 011 659 A1 ist eine Batterieeinheit für Fahrzeuge bekannt, die eine Anzahl von Batterien, Stromschienen und isolierende Platten aufweist, wobei zwischen den Platten Kanäle für eine Kühlmittelzirkulation gebildet sind.

Aus der FR 1 499 419 A ist eine Batterieeinheit mit mehreren Batteriezellen bekannt, die mittels Zellverbindern elektrisch verbunden sind. Die Zellverbinder weisen Flansche auf, die in einen Kühlluftstrom ragen.

Aus der DE 10 2011 079 394 A1 ist ein Energiespeichermodul mit mehreren in Reihe geschalteten Energiespeicherzellen bekannt, wobei eine mit den Speicherzellen thermisch gekoppelte Kühleinrichtung zur Aufnahme und Abfuhr von Wärmeenergie vorgesehen ist.

Aus der US 2004/0166727 A1 ist ein elektrischer Verbinder zum Verbinden von Batterien mit einer vergrößerten Wärmeabgabefähigkeit bekannt.

Und aus der DE 10 2009 045 012 A1 ist ein Batteriesystem mit externer Prallkühlung und einer externen Kühlmediumsführung bekannt.

In der EP 2 924 797 A1, die einen Stand der Technik nach Art. 54(3) EPÜ darstellt, ist eine Vorrichtung zum Steuern der Temperatur einer Batterie mit einem Kühlmittelleitsystem beschrieben, das mehrere Ventile zur Versorgung von Batteriezellen mit Kühlmittel aufweist.

Aus der US 2011/0189511 A1 ist ein Batteriesystem mit mehreren Batteriepacks, die mehrere Batteriezellen aufweisen, wobei eine Kühlmediumsleitung zu jedem Batteriepack geführt ist und wobei Leiteinrichtungen Kühlmedium aus der Kühlmediumsleitung über das Gehäuse eines Batteriepacks verteilen.

Aufgabe der Erfindung ist es, eine Batterievorrichtung mit Kühlvorrichtung bzw. ein damit durchführbares Kühlverfahren zur Kühlung von Batteriezellen bereitzustellen, bei denen mit einem verringerten Aufwand in der Fertigung eine bessere Vergleichmäßigung der Temperatur innerhalb der Batteriezellen erzielt werden kann.

Diese Aufgabe wird durch eine Batterievorrichtung mit den Merkmalen des Anspruchs 1 gelöst.

Ein Kühlverfahren zur Kühlung von Batteriezellen einer solchen Batterievorrichtung ist Gegenstand des Nebenanspruches.

Vorteilhafte Ausgestaltungen der Erfindung sind Gegenstand der Unteransprüche.

Es wird eine Batterievorrichtung mit mehreren Batteriezellen und einer Kühlvorrichtung vorgeschlagen. Die Kühlvorrichtung zur Kühlung der Batteriezellen weist ein Wärmetauschelement zur thermischen Verbindung mit einer Batteriezelle zum Leiten von Wärme von der Batteriezelle an eine Umgebung und eine vom dem Wärmetauschelement getrennt angeordnete Kühlmediumszufuhreinrichtung zum Zuführen eines Kühlmediums zu dem Wärmetauschelement auf.

Somit weist die Kühlvorrichtung einerseits ein Wärmetauschelement auf, das in direktem Kontakt mit einer Batteriezelle steht, um so die Prozesswärme, die während des Betriebs der Batteriezelle entsteht, direkt an die Umgebung abzuleiten.

Weiter wird das Wärmetauschelement durch ein Kühlmedium gekühlt, das über eine Kühlmediumszufuhreinrichtung zugeführt wird, die jedoch nicht in Kontakt mit dem Wärmetauschelement steht, und zwar insbesondere nicht in thermischem Kontakt mit dem Wärmetauschelement. So wird gewährleistet, dass die Kühlmediumszufuhreinrichtung und somit auch das darin geführte Kühlmedium eine kühlere Temperatur unabhängig von dem Wärmetauschelement aufweist. Durch Kühlung des Wärmetauschelements mit dem Kühlmedium ist es möglich, eine große Menge von Wärme von der Batteriezelle an die Umgebung, insbesondere an das Kühlmedium, abzugeben.

Die Kühlung der Batteriezelle erfolgt somit über ein externes Element, wodurch der Grad der Kühlung der Batteriezelle vorteilhaft gezielt eingestellt und gesteuert werden kann.

Vorzugsweise ist das Wärmetauschelement aus einem thermisch gut leitfähigen Material gebildet, um so bevorzugt die Wärme schnell von der Batteriezelle an die Umgebung abzuleiten.

Besonders bevorzugt wird die Verbindung des Wärmetauschelements mit der Batteriezelle über einen Anschlusspol der Batteriezelle hergestellt.

Da es einen Zusammenhang zwischen elektrischer und thermischer Leitfähigkeit gibt, ist es vorteilhaft, die thermische Verbindung und somit die thermische Leitung der Wärme von der Batteriezelle zu dem Wärmetauschelement bevorzugt über den Anschlusspol, der für die Stromführung in die und aus der Batteriezelle verantwortlich ist, zu realisieren.

Erfindungsgemäß ist das Wärmetauschelement mit einem Zellverbinder zum elektrischen Verbinden wenigstens zweier Zellen einer Batterie gebildet.

In besonders bevorzugter Ausgestaltung wird das Wärmetauschelement durch den Zellverbinder bereitgestellt.

In einer Batterie ist zumeist eine große Anzahl von Batteriezellen vorhanden, die bevorzugt über metallische Leiter, die sogenannten Zellverbinder, in Reihen- und/oder Parallelschaltung vorteilhaft miteinander verbunden sind. Die Zellverbinder sind somit vorteilhaft zur Stromführung innerhalb der Batterie zwischen den einzelnen Batteriezellen verantwortlich. Aufgrund des Zusammenhangs zwischen elektrischer und thermischer Leitfähigkeit dienen sie vorteilhaft dazu, nicht nur elektrische Energie zwischen den Batteriezellen zu führen, sondern auch bevorzugt eine thermische Verbindung zwischen den Batteriezellen herzustellen. Die Batteriezellen, die dann vorteilhaft mit dem Zellverbinder verbunden sind, führen dann bevorzugt ihre Prozesswärme über den einen gleichen Zellverbinder an die Umgebung ab, wobei der Zellverbinder vorteilhaft durch das Kühlmedium herabgekühlt wird und somit eine größere Menge an Wärme aus den Batteriezellen in die Umgebung abgeführt werden kann. Die Batteriezellen geben gleichmäßig Wärme an den vorteilhaften Zellverbinder ab und werden so vorteilhaft gleichzeitig auf einer bevorzugt gleichen Temperatur gehalten.

Das Wärmetauschelement dient somit vorzugsweise einer Vergleichmäßigung der Temperatur in den Batteriezellen, die es verbindet.

Bevorzugt weist das Wärmetauschelement Oberflächenvergrößerungselemente, insbesondere Rippen und/oder Fahnen, auf.

Je größer die Oberfläche des Wärmetauschelements ist, umso größer ist vorteilhaft die Wechselwirkung mit der Umgebung, so dass eine größere Menge an Wärme an die Umgebung abgeleitet werden kann. Rippen bzw. Fahnen können zudem bevorzugt einfach hergestellt werden.

Beispielsweise können die Oberflächenvergrößerungselemente, wie beispielsweise die Rippen und/oder Fahnen, durch gemeinsames Ausstanzen mit dem Zellverbinder hergestellt werden.

Alternativ ist es jedoch auch möglich, die Oberflächenvergrößerungselemente an den Zellverbinder anzulöten oder anzuschweißen.

Es ist vorteilhaft auch möglich, eine Kombination der genannten Herstellungsverfahren zum Versehen des Wärmetauschelements mit den Oberflächenvergrößerungselementen zu wählen.

Erfindungsgemäß weist die Kühlmediumszufuhreinrichtung eine benachbart zu dem Wärmetauschelement angeordnete Kühlmediumsführung zum Führen von Kühlmedium in einem Bereich getrennt von der Batteriezelle auf.

Vorzugsweise verläuft die Kühlmediumsführung im Wesentlichen parallel zu dem Wärmetauschelement.

Vorzugsweise ist die Kühlmediumsführung derart zu dem Wärmetauschelement angeordnet, dass sie sich ohne Kontakt, das heißt vorzugsweise thermisch isolierend, benachbart zu dem Wärmetauschelement befindet.

Insbesondere bei einer Vielzahl von Batteriezellen in einer Batterie ist es so bevorzugt möglich, das Kühlmedium vorteilhaft gleichermaßen beabstandet zu mehreren Wärmetauschelementen zuzuführen, um so eine bevorzugte gleichmäßige Kühlung über die mehreren Wärmetauschelemente und somit auch die mehreren Batteriezellen erreichen zu können.

In bestimmten Ausführungsformen von Batterien liegen die Zellverbinder und somit die Wärmetauschelemente auf unterschiedlichen elektrischen Potentialen, weswegen eine elektrische Isolierung vorteilhaft ist. Daher ist es bevorzugt, wenn die Kühlmediumsführung thermisch und elektrisch isoliert von den Wärmetauschelementen, das heißt insbesondere getrennt zu den Wärmetauschelementen angeordnet ist, um so vorteilhaft zu verhindern, dass über die Kühlmediumszufuhreinrichtung ein elektrischer Kontakt zwischen den Wärmetauschelementen hergestellt wird.

Die Führung des Kühlmediums in einem Bereich getrennt von der bzw. den Batteriezellen hat den Vorteil, dass die Temperatur des Kühlmediums vor Kontakt mit den Wärmetauschelementen bzw. dem Wärmetauschelement vorzugsweise unbeeinflusst bleibt von der Temperatur der Batteriezellen bzw. des Wärmetauschelements.

Erfindungsgemäß ist die Kühlmediumsführung als plattenförmiges oder flächiges Element ausgebildet und kann somit vorteilhaft einfach hergestellt und in der Batterie benachbart zu den Wärmetauschelementen angeordnet werden.

Erfindungsgemäß weist die Kühlmediumsführung wenigstens eine Ausleiteinrichtung zum Leiten von Kühlmedium in Richtung auf die Batteriezelle auf. Es ist somit möglich, vorteilhaft punktuell die Batteriezelle durch das Kühlmedium zu kühlen und so einen größtmöglichen Wärmeaustausch erzielen zu können.

Bevorzugt ist die Ausleiteinrichtung zum im Wesentlichen senkrechten Leiten von Kühlmedium auf das Wärmetauschelement ausgebildet. Dazu ist sie vorzugsweise benachbart zu dem Wärmetauschelement angeordnet.

Trifft das Kühlmedium bevorzugt weitgehend senkrecht auf das Wärmetauschelement auf, kann bevorzugt eine gezielte Kühlung nur des Wärmetauschelements erreicht werden, da das Kühlmedium vorteilhaft nicht an weiteren Elementen vorbeifließen muss und nicht durch thermische Wechselwirkung mit anderen Elementen seine Kühleffizienz verliert. Zusätzlich wird durch das senkrechte Auftreffen des Kühlmediums auf das Wärmetauschelement erzielt, dass das Kühlmedium einen möglichst kurzen Kontaktweg zum Wärmetauschelement aufweist und so eine maximale Aufnahme von Wärme vorteilhaft ermöglicht wird.

Bevorzugt ist es, wenn das plattenförmige oder flächige Element, das parallel zu dem Wärmetauschelement verläuft, ein Loch aufweist, das benachbart zu dem Wärmetauschelement angeordnet ist. So ist es vorteilhaft möglich, die Kühlmediumsführung besonders einfach durch beispielsweise Ausstanzen des plattenförmigen Elements herzustellen.

Vorteilhaft trifft das Kühlmedium senkrecht auf das Wärmetauschelement und wird nach Kontakt sofort seitlich und nach unten von der Kühlmediumsführung weggeleitet, so dass vorteilhaft kein Kontakt zwischen nachströmendem Kühlmedium und wegströmendem Kühlmedium erfolgt, wodurch die Kühlwirkung des Kühlmediums herabgesetzt werden könnte.

Erfindungsgemäß sind weiter eine Mehrzahl von Wärmetauschelementen und eine Mehrzahl von Ausleiteinrichtungen vorgesehen, insbesondere bei einer Batterie mit einer Vielzahl von Batteriezellen.

Weiter sind Kühlmediumsablenkeinrichtungen zum Erzielen eines gleichen Kühlmediumdrucks und/oder einer gleichen Kühlmediumsmenge an den Wärmetauschern vorgesehen.

Weist eine Batterie mehrere Batteriezellen und somit auch mehrere Wärmetauschelemente auf, ist es von Vorteil, wenn sämtliche Wärmetauschelemente vorzugsweise auf eine gleiche Temperatur herabgekühlt werden, um so auch eine bevorzugt gleiche Temperatur innerhalb der einzelnen Batteriezellen gewährleisten zu können. Alternativ ist es vorteilhaft, wenn die Wärmetauschelemente selektiv gekühlt werden. Beispielsweise kann bei einer Batterianordnung mit mehreren Batteriezellen eine Zelle mit höherem Innenwiderstand stärker gekühlt werden.

Dies kann dadurch erzielt werden, dass in der Kühlmediumszufuhreinrichtung bzw. der Kühlmediumsführung Kühlmediumsablenkeinrichtungen vorgesehen sind, die dazu führen, dass an jeder Ausleiteinrichtung vorzugsweise die gleiche Menge an Kühlmedium auf das benachbart dazu liegende Wärmetauschelement geführt wird, so dass vorteilhaft eine gleiche Kühlung sowohl an der in Flussrichtung des Kühlmediums liegenden ersten Ausleiteinrichtung als auch an der in Flussrichtung liegenden letzten Ausleiteinrichtung erzielt werden kann.

Vorteilhaft ist wenigstens ein Ableitkanal zum Ableiten von Kühlmedium nach Kontakt mit dem Wärmetauschelement vorgesehen. Durch das Vorsehen von Ableitkanälen kann bevorzugt gezielt das Kühlmedium von dem Wärmetauschelement und der Batteriezelle weggeführt werden und in besonders bevorzugter Ausgestaltung sogar wieder in den Kühlmediumskreislauf zurückgeführt werden.

Bevorzugt ist es, wenn sämtliche Elemente derart ausgebildet sind, dass sie sowohl gasförmige als auch flüssige Kühlmedien führen bzw. kontaktieren können.

Es ist vorteilhaft, wenn die verwendeten Kühlmedien nichtleitend sind, um so bevorzugt eine elektrische Kontaktierung der eventuell voneinander elektrisch isolierten Wärmetauschelemente zu vermeiden.

Besonders bevorzugt ist es, wenn die verwendeten Kühlmedien chemisch inert sind, das heißt keine Korrosion an den Batteriezellen oder den Elementen der Kühlvorrichtung hervorrufen. Insbesondere bevorzugt ist es, wenn sie inert in Bezug auf Alkalimetalle sind, das heißt keine Reaktion mit Alkalimetallen eingehen, da Batterien häufig auf Basis von Alkalimetallen hergestellt werden. Dazu ist es vorteilhaft, wenn sie frei von Sauerstoff sind.

Eine vorteilhafte Batterievorrichtung weist mehrere Batteriezellen auf sowie eine Kühlvorrichtung wie oben beschrieben, um die mehreren Batteriezellen gleichmäßig kühlen zu können.

Ein Kühlverfahren zur Kühlung von Batteriezellen einer solchen Batterievorrichtung weist die folgenden Schritte auf:
a) Bereitstellen einer Kühlvorrichtung wie oben beschrieben, die wenigstens ein Wärmetauschelement aufweist;
b) thermisches Verbinden des Wärmetauschelements mit wenigstens einer Batteriezelle;
c) berührungsloses Zuführen von Kühlmedium zu dem Wärmetauschelement.

Vorteilhaft wird ein gasförmiges oder flüssiges Kühlmedium verwendet, das insbesondere nichtleitend und/oder chemisch inert ist, insbesondere inert in Bezug auf Alkalimetalle, mehr insbesondere frei von Sauerstoff.

Vorzugsweise wird in dem Kühlverfahren bei mehreren Wärmetauschern in der Batterie das Kühlmedium derart zu den Wärmetauschern zugeführt, dass an jedem Wärmetauscher ein im Wesentlichen gleicher Kühlmediumsdruck und/oder eine gleiche Kühlmediumsmenge vorliegt.

In einer anderen Ausführung kann die Kühlvorrichtung und/oder das Kühlverfahren auch zur Erwärmung und nachfolgender Kühlung von Batteriezelle(n) verwendet werden. Batteriezelle(n) oder eine Batterievorrichtung mit mehreren Batteriezellen, die längere Zeit bei einer niedrigen Temperatur, beispielsweise -30°C bis -20°C, verbleiben, werden zunächst auf eine Mindesttemperatur oder Betriebstemperatur vorgewärmt, um einsatzbereit zu sein. Bei einer solchen niedrigen Temperatur könnte die erforderliche Leistungsfähigkeit und/oder Zuverlässigkeit der Batteriezellen oder der Batterievorrichtung ohne eine Erwärmung auf Mindesttemperatur oder Betriebstemperatur auf Grund der niedrigen Temperatur der Batteriezellen nicht mehr gewährleistet sein. Um die Batteriezelle(n) vorzuwärmen, weist das Kühlmedium eine höhere Temperatur als die zu erwärmende(n) Batteriezelle(n) auf. Vorteilhaft, weist das Kühlmedium eine Temperatur auf, beispielsweise 0°C, die höher als die Temperatur der zu erwärmenden Batteriezelle(n) ist, wobei ein unzulässig hoher thermischer Gradient vermieden werden soll. Im weiteren Betrieb wird die in den Batteriezelle(n) entstehende Verlustwärme wie beschrieben an die Umgebung abgeleitet.

Ein Ausführungsbeispiel der Erfindung wird anhand der beigefügten Zeichnungen näher erläutert. Darin zeigt:

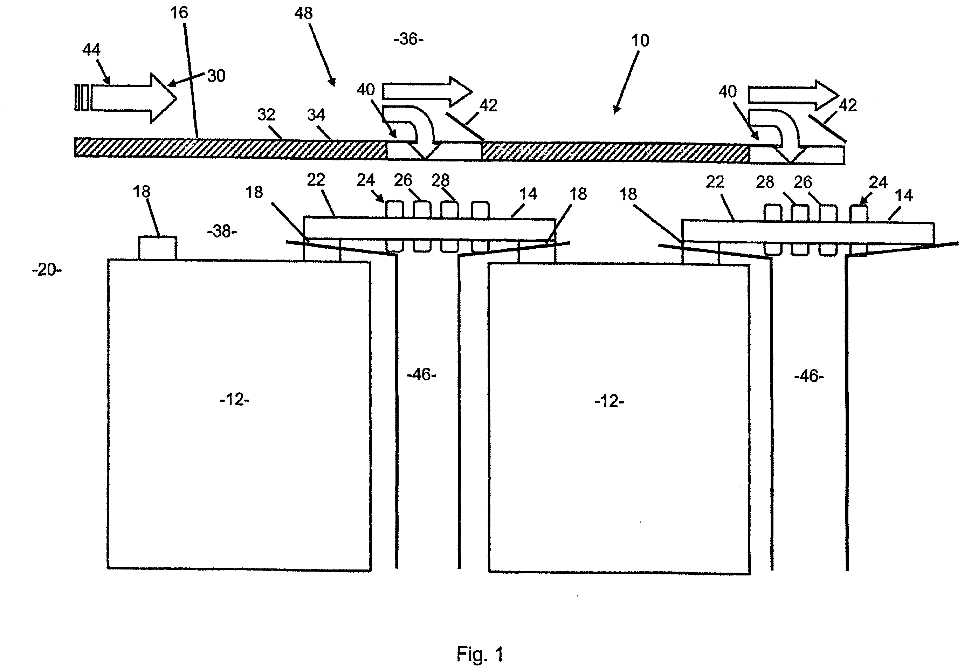

- Fig. 1: eine Kühlvorrichtung zur Kühlung von Batteriezellen.

Fig. 1 zeigt eine Kühlvorrichtung 10 zur Kühlung von Batteriezellen 12.

Die Kühlvorrichtung 10 weist mehrere Wärmetauschelemente 14 sowie eine Kühlmediumszufuhreinrichtung 16 auf, die von den Wärmetauschelementen 14 räumlich und insbesondere thermisch getrennt angeordnet ist.

Die Wärmetauschelemente 14 sind zur thermischen Verbindung mit jeweils zwei der Batteriezellen 12 ausgebildet, wobei die Verbindung über Anschlusspole 18 der Batteriezellen 12 realisiert ist. Über die Anschlusspole 18 geben die Batteriezellen 12 Prozesswärme an die Wärmetauschelemente 14 ab, die diese an eine Umgebung 20 ableiten.

Die Wärmetauschelemente 14 sind mit Zellverbindern 22 gebildet, die die Batteriezellen 12 elektrisch miteinander verbinden. Um die Oberfläche der Wärmetauschelemente 14 zu vergrößern und somit eine thermische Wechselwirkung mit der Umgebung 20 zu verbessern, weisen die Wärmetauschelemente 14 Oberflächenvergrößerungselemente 24 auf, die in der vorliegenden Ausführungsform durch Rippen 26 und Fahnen 28 gebildet sind.

Über die Kühlmediumszufuhreinrichtung 16 wird Kühlmedium 30 in Richtung auf die Batteriezellen 12 und die Wärmetauschelemente 14 geleitet, ohne dass die Kühlmediumszufuhreinrichtung 16 dabei in Kontakt mit den Wärmetauschelementen 14 steht. Dazu weist die Kühlmediumszufuhreinrichtung 16 eine Kühlmediumsführung 32 auf, die als plattenförmiges Element 34 ausgebildet ist und einen kühleren ersten Bereich 36, in dem Kühlmedium 30 geführt wird, von einem wärmeren zweiten Bereich 38 um die erhitzten Batteriezellen 12 herum trennt. Die Kühlmediumsführung 32 ist im Wesentlichen parallel verlaufend zu den Wärmetauschelementen 14 angeordnet und weist benachbart zu den Wärmetauschelementen 14 Ausleiteinrichtungen 40 auf, durch die Kühlmedium 30 in Richtung auf die Batteriezellen 12 und somit auch senkrecht auf die Wärmetauschelemente 14 geleitet wird.

Damit an jeder der Ausleiteinrichtungen 40 eine gleiche Menge an Kühlmedium 30 auf das darunter liegende Wärmetauschelement 14 geleitet werden kann, weist die Kühlmediumszufuhreinrichtung 16 Kühlmediumsablenkeinrichtungen 42 auf, die das Kühlmedium 30 aus einem Hauptstrom 44 an Kühlmedium 30 in die Ausleiteinrichtung 40 leiten und so eine gleichmäßige Kühlung an allen Wärmetauschelementen 14 und somit allen Batteriezellen 12 ermöglicht wird.

Das Kühlmedium 30 kann nach Kontakt mit den Wärmetauschelementen 14 seitlich, das heißt parallel zu der Kühlmediumsführung 32 und nach unten, das heißt senkrecht von der Kühlmediumsführung 32 weg, abströmen.

In bevorzugter Ausgestaltung, die in Fig. 1 gezeigt ist, ist jedoch ein Ableitkanal 46 unterhalb des Wärmetauschelements 14 vorgesehen, um das Kühlmedium 30 nach Kontakt mit dem Wärmetauschelement 14 gezielt wegleiten zu können. Somit wird vorteilhaft ein Kontakt von kaltem zuströmenden Kühlmedium 30 mit dem bereits aufgewärmten Kühlmedium 30 vermieden und eine effektivere Kühlung ermöglicht.

Fig. 1 zeigt somit insgesamt eine Batterievorrichtung 48, die mehrere Batteriezellen 12 und eine Kühlvorrichtung 10 aufweist, die derart ausgestaltet ist, dass sämtliche Batteriezellen 12 gleichmäßig gekühlt werden können.

Batteriezellen 12 werden für eine gute Leistungs- und Lebensdauererzielung vorteilhaft gekühlt und dabei auf gleichem Temperaturniveau gehalten.

Bislang sind unterschiedliche Verfahren der Flüssig- oder Gaskühlung bekannt, wobei entweder nur eine mangelhafte Vergleichmäßigung der Temperatur erreicht werden kann oder der Aufwand in der Fertigung stark ansteigt.

Daher wird nun die Kombination des Prinzips der Kühlung aus dem Bereich der Leistungselektronik mit dem Prinzip der effizienten Kühlung von Batteriezellen 12 über deren Anschlusspole 18 unter gleichzeitiger Umgehung von Problemen, die durch das unterschiedliche elektrische Potenzial der einzelnen Anschlusspole 18 entstehen können, vorgeschlagen.

Dadurch kann eine einfache, robuste und effiziente Kühlung größerer Batteriesysteme, das heißt Batterievorrichtungen 48, bei Einhaltung einer nahezu gleichmäßigen Temperatur aller Batteriezellen 12 erzielt werden. Weiter kann aufgrund der gleichmäßigen Kühlung ein weitgehend identisches Betriebsverhalten der individuellen Batteriezellen 12 und damit verbunden eine gleichmäßige Alterung der individuellen Batteriezellen 12 erreicht werden. Zusätzlich entsteht die Möglichkeit der Konstanthaltung der individuellen Zelltemperaturen auch bei hohen Entladeströmen und damit Vermeidung eines "thermal runaway"-Effekts.

Das Leistungsvermögen und die Lebensdauer von Batteriezellen 12 hängen unter anderem stark von der Zelltemperatur und der Einwirkdauer von zum Beispiel zu hohen Temperaturen ab. Prozesswärme entsteht belastungsabhängig innerhalb der Batteriezelle 12 aufgrund ohmscher bzw. diffusiver Verluste und muss nach außen abgeführt werden, um die Zelltemperatur nicht übermäßig ansteigen zu lassen. Andererseits sind hohe Temperaturen günstig hinsichtlich der Abgabe hoöher Ströme, die bekanntlich in einer Batterievorrichtung 48 beliebiger Ausführungsform über die intrazelluläre Elektrodenkinetik zum einen sowie die Diffusion von Ladungsträgern durch den Elektrolyten zum anderen definiert werden.

Die Elektrodenkinetik gehorcht dabei einem exponentiellen Zeitgesetz bezüglich der Temperatur, die Diffusionsgeschwindigkeit ist proportional zur Wurzel T. Das spricht für möglichst hohe Betriebstemperaturen, die jedoch prinzipiell limitiert sind durch die Stabilität der Materialien, die in den jeweiligen Batteriezellen 12 zur Anwendung kommen.

Insofern ist hier ein Kompromiss in der aktuellen Betriebstemperatur vorteilhaft. Zur Einhaltung einer solchen optimalen Prozesstemperatur, die für individuelle Batterievorrichtungen 48 unterschiedlich sein kann und daher nicht allgemein quantifizierbar und nur durch Messungen verifizierbar ist, ist eine leistungsfähige und gezielt steuerbare Kühlmöglichkeit der Batteriezellen 12 von Vorteil.

Je nach Bauart und Größe der Batteriezelle 12 ergibt sich ein gewisses Verhältnis von Volumen, in dem die Verlustwärme entsteht, zur Oberfläche, über die sie abgeführt werden kann. Zusätzlich ist der innere Aufbau an der Wärmeleitung beteiligt, da zum Beispiel metallische Anteile wie die Stromsammler und Anschlussfahnen meist eine deutlich bessere Wärmeleitung ermöglichen als zum Beispiel elektrisch isolierende Materialien zwischen den Elektroden. Hinzu kommt, dass, je größer die Batteriezelle 12 und je kompakter sie konstruiert ist, sich das Verhältnis Oberfläche zu Volumen verschlechtert, also mit einer erhöhten Energiespeichermenge und Leistungsfähigkeit oft eine schlechtere Kühlbarkeit einhergeht.

Die Leistungsfähigkeit der Batterievorrichtung 48 insgesamt hängt entscheidend von der Leistungsfähigkeit der Zellkühlung ab. Neben der Wärmeabfuhr an sich ist es bevorzugt, auf ein möglichst gleiches Temperaturniveau aller Batteriezellen 12 zu achten, da diese sonst unterschiedlich altern. Die Leistungsfähigkeit der gesamten Batterievorrichtung 48 wird durch die Leistungsfähigkeit der schwächsten Batteriezelle 12 vorgegeben, so dass vorteilhaft vermieden werden sollte, dass einzelne Batteriezellen 12 stärker altern als andere.

Es gibt einen Zusammenhang zwischen elektrischer und thermischer Leitfähigkeit, das heißt in den Bereichen, in denen der Strom geführt wird, ist in der Regel auch ein guter thermische Leitpfad vorhanden. Dies macht eine Kühlung über die Anschlusspole 18 einer Batteriezelle 12 interessant.

In einer Batterievorrichtung 48 ist meist eine große Anzahl von Batteriezellen 12 vereint und mit metallischen Leitern, den sogenannten Zellverbindern 22, in Reihen- und Parallelschaltung verbunden. Primäre Aufgabe der Zellverbinder 22 ist die Stromführung. Deshalb wäre es nachteilig, diese zur Vergrößerung der Oberfläche länger als notwendig zu gestalten, da dies den Widerstand und die Induktivität der Zellverbinder 22 unerwünscht erhöhen würde. Die Wärmeabfuhr in die Umgebung 20 wird daher vorliegend über mit dem Zellverbinder 22 ausgestanzte oder auf andere Weise thermisch gut leitfähig verbundene Kühlelemente, die Wärmetauschelemente 14, realisiert.

Zellverbinder 22 können auf unterschiedlichen elektrischen Potenzialen liegen und sind deswegen häufig voneinander elektrisch isoliert. In diesem Fall ist es nicht möglich, einen direkt angekoppelten gemeinsamen Kühlkörper in Form eines Wärmetauschelements 14 ohne wärmedämmende elektrische Isolierung, und auch keine gemeinsame Flüssigkeitskühlung mit nicht isolierendem Kühlmedium 30 vorzusehen.

Im Bereich der Leistungselektronik werden bei solchen Fällen zum Beispiel zu kühlende Halbleiterbauelemente auf Trägerplatten aufgebracht und von der der Bestückung abgewandten Seite her gekühlt. Ziel ist es, ein möglichst über die gesamte Trägerplatte gleiches Temperaturniveau herzustellen. Dies gelingt jedoch nicht, wenn auf einer Seite kaltes Kühlmittel unter die Platte strömt und auf der gegenüberliegenden Seite erwärmt abfließt, da Bauteile, die im Abflussbereich liegen, immer ein höheres Temperaturniveau erfahren werden als Bauteile im Umlaufbereich.

Aus dem Bereich der Leistungselektronik sind Kühlanordnungen bekannt, die zum Ziel haben, möglichst viele Punkte der zu kühlenden Fläche auf exakt gleichem Temperaturniveau zu halten und somit Temperaturgradienten zu vermeiden. Hierzu wird an möglichst vielen Stellen aus einem Kühlmittelzulauf senkrecht zur Platte Kühlmittel aufgebracht. Im Bereich zwischen den Ausströmpunkten kann das erwärmte verbrauchte Kühlmittel abfließen. Somit wird vermieden, dass die zu kühlenden Objekte in der Nähe eines zentralen Kühlmitteleintritts eine niedrigere Temperatur erfahren als diejenigen, die weiter weg sind und somit mit einem schon vorgewärmten Kühlmedium 30 in Kontakt kommen. Dieser aus der Leistungselektronik bekannter Ansatz wird mit flüssigen Kühlmedien 30 durchgeführt.

Der erfindungsgemäßen neuen Kühlung liegt folgende Idee zugrunde:
Die Zellverbinder 22 werden so gestaltet, dass über ihre erhöhte, insbesondere verrippte, Oberfläche Wärmeenergie an ein umgebendes Medium abgegeben werden kann. Die Erhöhung der Oberfläche kann zum Beispiel durch mit den Zellverbindern 22 ausgestanzte oder durch Lötung, Schweißung oder ein anderes thermisch gut anbindendes Verfahren befestigte Kühlfahnen 28 erfolgen.

Über den Zellverbindern 22 wird zum Beispiel durch eine Platte, beispielsweise das plattenförmige Element 34 oder Ähnliches, ein oberer Bereich, der erste Bereich 36, abgetrennt. In diesem oberen Bereich 36 wird beispielsweise kalte Kühlluft eingeblasen. Da in dem oberen Bereich keine Wärmequellen sitzen, herrscht dort überall etwa gleiches Temperaturniveau.

In den Bereichen, in denen sich unterhalb der Platte 34 die Zellverbinder 22 befinden, d. h. in dem zweiten Bereich 38, sind Öffnungen, die Ausleiteinrichtungen 40, in der Platte 34 vorgesehen, durch die die Kühlluft bzw. ein anderes Kühlmedium 30 auf die Zellverbinder 22 geblasen bzw. geleitet wird. Gegebenenfalls kann eine überall gleiche Luftmenge und ein gleicher Anblasdruck durch entsprechende Luftführungen, beispielsweise durch Kühlmediumsablenkeinrichtungen 42, oberhalb der Platte 34 erzielt werden.

Im Unterschied zu bekannten Kühlmethoden wird das Kühlmedium 30 hier direkt auf die zu kühlenden Stellen geblasen bzw. geleitet. Es ist keine Trägerplatte oder Ähnliches notwendig, da die Zellverbinder 22 durch die Anschlüsse an den Batteriezellen 12 gehalten werden. Somit stellt das unterschiedliche elektrische Potenzial der Zellverbinder 22 kein Problem dar. Es ist vorteilhaft, wenn ein nicht leitfähiges Kühlmedium 30 verwendet wird.

Das erwärmte Kühlmedium 30 kann seitlich und nach unten wegströmen, gegebenenfalls sind entsprechende Kanäle, wie beispielsweise die Ableitkanäle 46, hierfür vorgesehen.

Es wird eine effiziente Wärmeabfuhr an den Zellverbindern 22 erreicht, das Temperaturniveau kann für alle Batteriezellen 12 nahezu gleich gehalten werden.

Die Erfindung bezieht sich auf Batterien 48 mit Batteriezellen 12 in unterschiedlicher Formgebung wie rund, prismatisch, als Pouch eingeschweißt oder in einer anderen Bauform, die über Anschlusspole 18 wie zum Beispiel Laschen, Fahnen, Drähte, metallische Bereiche auf der Oberfläche, usw. verfügen.

Es können gasförmige oder flüssige nichtleitende, das heißt dielektrische, Kühlmedien 30 eingesetzt werden. Hierzu ist es besonders bevorzugt, insbesondere bei Alkali-Batteriesystemen wie Na-s, Li-basierten Batteriezellen 12, dass nur Kühlmedien 30 eingesetzt werden, die chemisch inert bezüglich der Alkalimetalle sind. Insbesondere ist es bevorzugt, wenn sauerstofffreie Kühlmedien 30 eingesetzt werden, da die Affinität der Alkalimetalle zu Sauerstoff besonders hoch ist.

### Bezugszeichenliste:

- 10: Kühlvorrichtung
- 12: Batteriezelle
- 14: Wärmetauschelement
- 16: Kühlmediumszufuhreinrichtung
- 18: Anschlusspol
- 20: Umgebung
- 22: Zellverbinder
- 24: Oberflächenvergrößerungselement
- 26: Rippe
- 28: Fahne
- 30: Kühlmedium
- 32: Kühlmediumsführung
- 34: plattenförmiges oder flächiges Element
- 36: erster Bereich
- 38: zweiter Bereich
- 40: Ausleiteinrichtung
- 42: Kühlmediumsablenkeinrichtung
- 44: Hauptstrom
- 46: Ableitkanal
- 48: Batterievorrichtung

## Patentansprüche

1. Batterievorrichtung (48) mit mehreren Batteriezellen (12) und einer Kühlvorrichtung (10) zum gleichmäßigen Kühlen der mehreren Batteriezellen (12), wobei die Kühlvorrichtung (10) zur Kühlung der Batteriezellen (12) umfasst:
ein Wärmetauschelement (14), das mit einer Batteriezelle (12) thermisch verbindbar ist, um Wärme von der Batteriezelle (12) an eine Umgebung (20) zu leiten, und eine von dem Wärmetauschelement (14) getrennt angeordnete Kühlmediumszufuhreinrichtung (16) zum Zuführen eines Kühlmediums (30) zu dem Wärmetauschelement (14), wobei die Kühlmediumszufuhreinrichtung (16) eine benachbart zu dem Wärmetauschelement (14) angeordnete Kühlmediumsführung (32) zum Führen von Kühlmedium (30) in einem Bereich (36) getrennt von der Batteriezelle (12) aufweist,
wobei die Kühlmediumsführung (32) als plattenförmiges oder flächiges Element (34) ausgebildet ist und
wobei die Kühlmediumsführung (32) wenigstens eine Ausleiteinrichtung (40) zum Leiten von Kühlmedium (30) in Richtung auf die Batteriezelle (12) aufweist,
**dadurch gekennzeichnet, dass**
eine Mehrzahl von Wärmetauschelementen (14) und eine Mehrzahl von Ausleiteinrichtungen (40) vorgesehen sind, wobei Kühlmediumsablenkeinrichtungen (42) vorgesehen sind zum Erzielen eines gleichen Kühlmediumsdrucks an den Wärmetauschelementen (14) und/oder einer gleichen Kühlmediumsmenge an den Wärmetauschelementen (14),
dass die Wärmetauschelemente (14) als Zellverbinder (22) zum elektrischen Verbinden wenigstens zweier Batteriezellen (12) ausgebildet sind und,
dass die Ausleiteinrichtungen (40) durch benachbart zu den Wärmetauschelementen (14) angeordnete Öffnungen gebildet sind.

2. Batterievorrichtung (48) nach Anspruch 1,
**dadurch gekennzeichnet,**
**dass** die Kühlvorrichtung (10) weiter wenigstens einen Anschlusspol (18) einer Batteriezelle (12) zum Verbinden des Wärmetauschelements (14) mit der Batteriezelle (12) aufweist.

3. Batterievorrichtung (48) nach einem der Ansprüche 1 oder 2,
**dadurch gekennzeichnet, dass** das Wärmetauschelement (14) Oberflächenvergrößerungselemente (24), insbesondere Rippen (26) und/oder Fahnen (28), aufweist.

4. Batterievorrichtung (48) nach Anspruch 3,
**dadurch gekennzeichnet, dass** die Oberflächenvergrößerungselemente (24) durch Ausstanzen gemeinsam mit dem Zellverbinder (22) oder durch Anlöten an den Zellverbinder (22) oder durch Anschweißen an den Zellverbinder (22) gebildet sind.

5. Batterievorrichtung (48) nach einem der Ansprüche 1 bis 4,
**dadurch gekennzeichnet, dass** die Kühlmediumsführung (32) im Wesentlichen parallel zu dem Wärmetauschelement (14) verläuft.

6. Batterievorrichtung (48) nach einem der voranstehenden Ansprüche,
**dadurch gekennzeichnet, dass** die benachbart zu dem Wärmetauschelement (14) angeordnete Ausleiteinrichtung (40) zum im Wesentlichen senkrechten Leiten von Kühlmedium (30) auf das Wärmetauschelement (14) ausgebildet ist.

7. Batterievorrichtung (48) nach einem der Ansprüche 1 bis 6,
**dadurch gekennzeichnet, dass** wenigstens ein Ableitkanal (46) zum Ableiten von Kühlmedium (30) nach Kontakt mit dem Wärmetauschelement (14) vorgesehen ist.

8. Kühlverfahren zur Kühlung von Batteriezellen (12) einer Batterievorrichtung (48) nach einem der voranstehenden Ansprüche, mit den Schritten:
a) Bereitstellen der Kühlvorrichtung (10) mit dem wenigstens einen Wärmetauschelement (14);
b) thermisches Verbinden des als Zellverbinder (22) ausgebildeten Wärmetauschelements (14) mit wenigstens einer Batteriezelle (12);
c) berührungsloses Zuführen von Kühlmedium (30) zu dem Wärmetauschelement (14).

9. Kühlverfahren nach Anspruch 8,
**dadurch gekennzeichnet, dass** ein gasförmiges oder flüssiges Kühlmedium (30) verwendet wird, das nicht leitend und/oder chemisch inert ist.

10. Kühlverfahren nach Anspruch 9,
**dadurch gekennzeichnet,**
**dass** das Kühlmedium inert in Bezug auf Alkalimetalle und frei von Sauerstoff ist.

11. Kühlverfahren nach einem der Ansprüche 8 bis 10,
**dadurch gekennzeichnet, dass** bei den mehreren Wärmetauschelementen (14) das Kühlmedium (30) derart zu den Wärmetauschelementen (14) zugeführt wird, dass an jedem Wärmetauschelement (14) ein im Wesentlichen gleicher Kühlmediumsdruck und/oder eine gleiche Kühlmediumsmenge vorliegt.

## Claims

1. Battery device (48) having a plurality of battery cells (12) and a cooling device (10) for evenly cooling the plurality of battery cells (12), wherein the cooling device (10), in order to cool the battery cells (12), comprises: a heat exchange element (14) that is able to be thermally connected to a battery cell (12) in order to route heat from the battery cell (12) to an environment (20), and a coolant feeding apparatus (16), arranged separately from the heat exchange element (14), for feeding a coolant (30) to the heat exchange element (14), wherein the coolant feeding apparatus (16) has a coolant guide (32), arranged next to the heat exchange element (14), for guiding coolant (30) in a region (36) separate from the battery cell (12), wherein the coolant guide (32) is designed as a plate-shaped or flat element (34), and wherein the coolant guide (32) has at least one channelling apparatus (40) for routing coolant (30) in the direction of the battery cell (12), **characterized in that**
a multiplicity of heat exchange elements (14) and a multiplicity of channelling apparatuses (40) are provided, wherein coolant deflection apparatuses (42) are provided in order to achieve an equal coolant pressure at the heat exchange elements (14) and/or an equal amount of coolant at the heat exchange elements (14),
**in that** the heat exchange elements (14) are designed as cell connectors (22) for electrically connecting at least two battery cells (12), and
**in that** the channelling apparatuses (40) are formed by apertures arranged next to the heat exchange elements (14) .

2. Battery device (48) according to Claim 1,
**characterized in that** the cooling device (10) furthermore has at least one connection pole (18) of a battery cell (12) for connecting the heat exchange element (14) to the battery cell (12).

3. Battery device (48) according to either of Claims 1 and 2,
**characterized in that** the heat exchange element (14) has surface expansion elements (24), in particular ribs (26) and/or vanes (28).

4. Battery device (48) according to Claim 3,
**characterized in that** the surface expansion elements (24) are formed by punching together with the cell connector (22) or by soldering onto the cell connector (22) or by welding onto the cell connector (22).

5. Battery device (48) according to one of Claims 1 to 4,
**characterized in that** the coolant guide (32) runs substantially parallel to the heat exchange element (14).

6. Battery device (48) according to one of the preceding claims, **characterized in that**
the channelling device (40) arranged next to the heat exchange element (14) is designed to route coolant (30) onto the heat exchange element (14) in a substantially perpendicular manner.

7. Battery device (48) according to one of Claims 1 to 6,
**characterized in that** at least one drainage channel (46) is provided for draining coolant (30) following contact with the heat exchange element (14).

8. Cooling method for cooling battery cells (12) of a battery device (48) according to one of the preceding claims, having the steps:
a) providing the cooling device (10) having the at least one heat exchange element (14);
b) thermally connecting the heat exchange element (14) designed as cell connector (22) to at least one battery cell (12);
c) feeding coolant (30), without contact, to the heat exchange element (14).

9. Cooling method according to Claim 8,
**characterized in that** a nonconductive and/or chemically inert gaseous or liquid coolant (30) is used.

10. Cooling method according to Claim 9,
**characterized in that** the coolant is inert with respect to alkali metals and is free from oxygen.

11. Cooling method according to one of Claims 8 to 10,
**characterized in that**, in the plurality of heat exchange elements (14), the coolant (30) is fed to the heat exchange elements (14) such that a substantially equal coolant pressure and/or an equal amount of coolant is present at each heat exchange element (14).

## Revendications

1. Arrangement de batterie (48) comprenant plusieurs cellules de batterie (12) et un arrangement de refroidissement (10) destiné à refroidir simultanément les plusieurs cellules de batterie (12), l'arrangement de refroidissement (10) destiné à refroidir les cellules de batterie (12) comprenant :
un élément échangeur de chaleur (14) qui peut être relié thermiquement à une cellule de batterie (12) afin de conduire de la chaleur depuis la cellule de batterie (12) vers un environnement (20), et un dispositif d'acheminement de fluide de refroidissement (16), disposé séparément de l'élément échangeur de chaleur (14) et destiné à acheminer un fluide de refroidissement (30) à l'élément échangeur de chaleur (14), le dispositif d'acheminement de fluide de refroidissement (16) possédant un guide à fluide de refroidissement (32) disposé adjacent à l'élément échangeur de chaleur (14) et servant à guider du fluide de refroidissement (30) dans une zone (36) séparée de la cellule de batterie (12), le guide à fluide de refroidissement (32) étant réalisé sous la forme d'un élément (34) en forme de plaque ou plat et le guide à fluide de refroidissement (32) possédant au moins un dispositif d'évacuation (40) destiné à conduire du fluide de refroidissement (30) en direction de la cellule de batterie (12),
**caractérisé en ce que**
une pluralité d'éléments échangeurs de chaleur (14) et une pluralité de dispositifs d'évacuation (40) sont présents, des dispositif de déviation de fluide de refroidissement (42) étant présents en vue d'obtenir une pression de fluide de refroidissement identique au niveau des éléments échangeurs de chaleur (14) et/ou un volume de fluide de refroidissement identique au niveau des éléments échangeurs de chaleur (14),
**en ce que** les éléments échangeurs de chaleur (14) sont réalisés sous la forme de connecteurs de cellule (22) servant à relier électriquement au moins deux cellules de batterie (12) et
**en ce que** les dispositifs d'évacuation (40) sont formés par des ouvertures disposées adjacentes aux éléments échangeurs de chaleur (14).

2. Arrangement de batterie (48) selon la revendication 1, **caractérisé en ce que** l'arrangement de refroidissement (10) possède en outre au moins un pôle de raccordement (18) d'une cellule de batterie (12) servant à raccorder l'élément échangeur de chaleur (14) à la cellule de batterie (12).

3. Arrangement de batterie (48) selon l'une des revendications 1 ou 2, **caractérisé en ce que** l'élément échangeur de chaleur (14) possède des éléments d'agrandissement de la surface (24), notamment des membrures (26) et/ou des pales(28).

4. Arrangement de batterie (48) selon la revendication 3, **caractérisé en ce que** les éléments d'agrandissement de la surface (24) sont formés par matriçage conjointement avec les connecteurs de cellule (22) ou par brasage aux connecteurs de cellule (22) ou par soudage aux connecteurs de cellule (22).

5. Arrangement de batterie (48) selon l'une des revendications 1 à 4, **caractérisé en ce que** le guide à fluide de refroidissement (32) s'étend sensiblement en parallèle de l'élément échangeur de chaleur (14).

6. Arrangement de batterie (48) selon l'une des revendications précédentes, **caractérisé en ce que** le dispositif d'évacuation (40) disposé adjacent à l'élément échangeur de chaleur (14) est configuré pour conduire sensiblement perpendiculairement du fluide de refroidissement (30) sur l'élément échangeur de chaleur (14) .

7. Arrangement de batterie (48) selon l'une des revendications 1 à 6, **caractérisé en ce qu'**au moins un canal de dérivation (46) destiné à dévier le fluide de refroidissement (30) après le contact avec l'élément échangeur de chaleur (14) est présent.

8. Procédé de refroidissement destiné à refroidir des cellules de batterie (12) d'un arrangement de batterie (48) selon l'une des revendications précédentes, comprenant les étapes suivantes :
a) mettre à disposition l'arrangement de refroidissement (10) comprenant l'au moins un élément échangeur de chaleur (14) ;
b) relier thermiquement l'élément échangeur de chaleur (14) réalisé sous la forme d'un connecteur de cellule (22) à au moins une cellule de batterie (12) ;
c) acheminer sans contact du fluide de refroidissement (30) à l'élément échangeur de chaleur (14).

9. Procédé de refroidissement selon la revendication 8, **caractérisé en ce qu'**un fluide de refroidissement (30) gazeux ou liquide est utilisé, lequel est non conducteur et/ou chimiquement inerte.

10. Procédé de refroidissement selon la revendication 9, **caractérisé en ce que** le fluide de refroidissement est inerte en référence aux métaux alcalins et exempt d'oxygène.

11. Procédé de refroidissement selon l'une des revendications 8 à 10, **caractérisé en ce qu'**en présence des plusieurs éléments échangeurs de chaleur (14), le fluide de refroidissement (30) est acheminé aux éléments échangeurs de chaleur (14) de telle sorte qu'une pression de fluide de refroidissement sensiblement identique et/ou un volume de fluide de refroidissement identique est présent au niveau de chaque élément échangeur de chaleur (14) .
